# EUROPEAN PATENT SPECIFICATION

(11) **EP 3 957 464 B1**
(45) Date of publication and mention of the grant of the patent: **04.11.2026**
(21) Application number: 21199324.1
(22) Date of filing: 21.09.2016
(51) Int. Cl.: B29C 59/04, B44B 5/00, B44B 5/02, B44C 1/24, B32B 37/20, B32B 38/00, B32B 38/06, B29L 7/00

(54) **LONG PLASTIC LAYER WITH EMBOSSING IN REGISTER WITH PATTERN AND ROLLING METHOD AND DEVICE THEREFOR**
LANGE KUNSTSTOFFSCHICHT MIT PRÄGUNG IN REGISTER MIT MUSTERN UND WALZVERFAHREN UND VORRICHTUNG DAFÜR
LONGUE COUCHE PLASTIQUE AVEC MOTIF EN REGISTRE AVEC PROCÉDÉ DE GAUFRAGE ET LAMINAGE ET DISPOSITIF ASSOCIÉ

(30) Priority: 15.06.2016 CN 201610421191
(43) Date of publication of application: 23.02.2022
(62) Document number(s) of the earlier application(s) in accordance with Art. 76 EPC: 16189834.1 / 3 257 653
(73) Proprietor: Unilin, BV, 8710 Wielsbeke (BE)
(72) Inventor: ZHU, Caiqin, Huzhou, 313300 (CN); WANG, Yibing, Huzhou, 313300 (CN); TANG, Wenjin, Huzhou, 313300 (CN)
(74) Representative: Unilin Technologies

(56) References cited:
- WO-A1-2016/184581
- DE-B3- 102006 019 591
- JP-A- H0 839 669
- JP-A- H06 215 371
- JP-A- H06 297 570
- JP-A- H07 276 497
- US-A1- 2008 122 129
- US-B1- 6 416 607

## Description

### BACKGROUND OF THE INVENTION

### Field of the Invention

The present invention relates to a polyvinyl chloride (PVC) decorative material, and more particularly, to a long plastic layer with an embossing in register with a pattern, and a method and a device for rolling the plastic layer with a continuous length. The decorative material may also be other thermoplastic plastic having stretchability.

### Description of the Related Art

Polyvinyl chloride (PVC) decorative material is a new and light floor decorative material that is very popular in the world, especially widely popular in Europe, America, and Japan and Korea in Asia. At present, the material has also been accepted by large and medium-sized cities in domestic and is increasingly applied in families, hospitals, schools, office buildings, factories, supermarkets, airport halls, stadiums, and other sites.

The existing PVC decorative material is usually formed by overlaying a transparent plastic layer on the surface (equivalent to a transparent layer, a protective layer, and a wear-resistant layer), an image plastic layer with a pattern in the middle (equivalent to a printing layer, a decorative layer, and a colored film layer), and a base layer in the bottom (equivalent to a bottom layer and a bottom plate). The PVC decorative material in such a structure may either be directly paved on the floor for use or bonded on the surface of a foam board, a laminated board, or a wood-plastic board to form a composite board. With the continuous development of the market, the decorative requirements of the PVC decorative material are increasingly improved. Users not only expect to process an embossing on the surface of the transparent plastic layer to increase a three-dimensional sense of the flooring, but also expect to make the embossing on the transparent plastic layer in register with the pattern on the image plastic layer (such as a wood grain, a stone grain, or a fabric grain), to make the embossing become the wood grain, stone grain, or fabric grain, thereby further improving the sense of reality and the three-dimensional sense of the PVC decorative material and increasing the simulation effect of the flooring.

A lamination method is a method adopted currently for registering the embossing of the transparent plastic layer with the pattern of the image plastic layer. To make the embossed pattern (the embossing for short) on the surface transparent plastic layer in register with the pattern (such as the wood grain, stone grain, or fabric grain) on the image plastic layer (i.e., the plastic layer printed with continuous unit patterns), the transparent plastic layer, the image plastic layer, and the base layer are firstly tailored into rectangle blocks with the same length, wherein the length shall be the length of one unit pattern on the image plastic layer, and then the transparent plastic layer, the image plastic layer, and the base layer are overlaid together in sequence and are placed on a lower pressing plate. The raised pattern on an upper pressing plate is aligned with the corresponding pattern on the image plastic layer through a positioning device, and finally the upper pressing plate is pressed on the transparent plastic layer, heating and pressing. Thus, the embossing pressed on the transparent plastic layer is in register with the pattern of the image plastic layer. The traditional lamination method has great defects: one pressing plate can only press two pieces of pros and cons PVC decorative materials at a time; during mass production, a large number of the pressing plates are required in case of increasing the yield, which leads to high costs and high energy consumption; the pattern on the pressing plate is aligned with the pattern on the image plastic layer, which requires manual operation, resulting in heavy workload and low accuracy rate and causing low production efficiency. Moreover, the length of each piece of the PVC decorative material is fixed, and the patterns of the manufactured flooring are repetitive, which does not comply with the property of natural materials.

US Patent No. 5122212 (filing date is Oct. 27, 1989 and application no. is 07/428262 ) discloses a novel improved process for registering the pattern. According to the process, a bottom plate, a decorative layer (transfer printing), and a wear-resistant layer achieve a pattern register effect through a register roller, and during rolling, the pattern on the decorative layer should correspond to the pattern designed on the register roller to press a pattern register effect. The technical solution tries to use a rolling process to improve the traditional lamination method above, so as to register the embossing on the wear-resistant layer with the pattern on the decorative layer. Unfortunately, the technical solution of the patent cannot be applied in practice all the time due to a fatal defect. The fatal defect is that: when the bottom plate, the decorative layer, and the wear-resistant layer are embossed by the register roller synchronously, an longitudinal extension of the decorative layer is unavoidable due to a rolling force and a rolling temperature (over 85°C), while the grains on the register roller for the embossing will not extend, which will certainly lead to a coincidence deviation between the pattern on the register roller and the pattern on the decorative layer and affect a three-dimensional effect and a simulation effect of the PVC decorative material, so that the product quality cannot be guaranteed. Because the register roller tightly extrudes the decorative layer while embossing, a relative position between the register roller and the decorative layer is tightly pressed by the register roller, which can neither be implemented through adjusting the feeding speed of the printing layer, nor implemented through adjusting the rotating speed of the register roller.

After years of exploration, on May 28, 2003, Chinese Patent Publication No. CN1420025A (application no. is 02149569.6 ) discloses a Long Floor Decorative Material with Printed Pattern in Register with Embossed Pattern. The patent technology is intended to solve the technical problem that "a printed pattern of a printing layer cannot be in register with an embossed pattern due to transformation (see paragraph 2 in page 5 of the Description)", and this invention "directly uses a glass fiber film made of waterproof stiffener to minimize the transformation of the printed pattern" (see paragraph 2 in page 5 of the Description). Although the method solves the above problem to some degree, the glass fiber film made of waterproof stiffener needs to be added, which increases the process costs and the material costs. The reason why this invention solves the problem to some degree is that once a register deviation exists between the printed pattern of the printing layer and the embossed pattern on the embossing roller along a longitudinal direction during rolling, the patent technology cannot correct the deviation through dynamic adjustment during rolling. Because an embossing roll machine tightly presses the printing layer while embossing, a relative position between the embossing roller and the printing layer cannot be implemented through adjusting the feeding speed of the printing layer and/or adjusting the rotating speed of the embossing roller (having the same defect with that of the US Patent No. 5122212 above).

For decades, those skilled in the art have been keeping exploring an effective way to implement coincidence of the embossing of the transparent plastic layer with the pattern of the image plastic layer, but no breakthrough is achieved. Until now, the coincidence of embossing can only be implemented using the oldest lamination method above in the art.

US 6,416,607 B1 discloses an embossing device for plastic floor tiles having a tape supply module with two wheels to supply a printed PVC tape, and a pressing wheel module having wheels for pressing and bonding the tape to a base substratum. The printed tape comprises position marks and a position mark sensing module is provided between the tape supply module and the pressing wheel module to detect the position of the markers. The tape supply control wheel module controls the tension of the tape in order to prevent wrinkles or breaks thereof.

### BRIEF SUMMARY OF THE INVENTION

An objective of the present invention is to provide a rolling method for a long plastic layer with an embossing in register with a pattern, which can implement coincidence between the embossing on a plastic layer and the pattern on a plastic layer and have high production efficiency, low cost and less energy consumption.

Another problem to be solved by the present invention is to provide a rolling device for implementing the rolling method for the long plastic layer with the embossing in register with the pattern, which can be used to process a long plastic layer with the embossing in register with the pattern and have high production efficiency, low cost and less energy consumption.

One more problem to be solved by the present invention is to process the long plastic layer with the embossing in register with the pattern using the foregoing method and device, which has low cost, good simulation effect and un-limited cutting length and complies with the property of a natural material.

To fulfill the foregoing objective, the present invention adopts the technical solution as defined in the claims.

A rolling method for a long plastic layer with an embossing in register with a pattern comprises a feeding step of feeding a plastic layer to be rolled into oppositely rolling rollers, the plastic layer being printed with continuous unit patterns; and a rolling step of hot rolling an embossing on the plastic layer. In the feeding step, a front side of the plastic layer is adjacent to an embossing roller of the oppositely rolling rollers, and an embossed pattern disposed around an outer circle of the embossing roller corresponds to a pattern of one unit pattern on the plastic layer. A longitudinal deviation of the embossing is adjusted in the rolling step. The adjusting step comprises detecting the longitudinal deviation between the embossed pattern on the embossing roller and the corresponding pattern on the plastic layer during rolling and adjusting a feeding tension of the plastic layer according to the longitudinal deviation, so as to adjust a stretching length of the plastic layer before rolling, so that the longitudinal deviation in subsequent rolling is reduced until the embossed pattern is longitudinally in register with the corresponding pattern on the plastic layer during rolling.

In an embodiment of the present invention, the adjusting step may comprise detecting a position of a preset part on each unit pattern of the plastic layer and detecting a position of a corresponding part on the embossing roller corresponding to the preset part at the same time; when the preset part is detected to be ahead of the corresponding part, increase the feeding tension of the plastic layer to increase the stretching length of the plastic layer before rolling, so as to reduce an ahead value of the preset part in subsequent rolling until a deviation between the preset part and the corresponding part is zero, so that the embossing hot-rolled on the plastic layer is longitudinally in register with the corresponding pattern on the plastic layer; and when the preset part is detected to be lagging behind the corresponding part, decrease the feeding tension of the plastic layer to decrease the stretching length of the plastic layer before rolling, so as to increase a lagged value of the preset part in subsequent rolling until the deviation between the preset part and the corresponding part is zero, so that the embossing hot-rolled on the plastic layer is longitudinally in register with the corresponding pattern on the plastic layer.

In an embodiment of the present invention, a spread length of the embossed pattern disposed around the outer circle of the embossing roller may be 1.01 to 1.5 times of the length of one unit pattern on the plastic layer before stretching; and a heating temperature in the rolling step may range from 85°C to 250°C.

In an embodiment of the present invention, in the rolling step, the longitudinal deviation of the embossing may be measured by a distance difference or a time difference between the detected preset part on each unit pattern of the plastic layer and the detected corresponding part on the embossing roller corresponding to the preset part.

In an embodiment of the present invention, during the process of adjusting the longitudinal deviation of the embossing in the rolling step, a lateral deviation of the image may be further adjusted, and when a lateral deviation is detected to be existing between the pattern on the plastic layer and the embossed pattern on the embossing roller, the plastic layer or the embossing roller may be moved along a lateral direction, so that the pattern on the plastic layer is in register with the embossed pattern around the outer circle of the embossing roller on the lateral direction.

In an embodiment of the present invention, a plastic base layer may be further comprised, the plastic base layer may be delivered to the oppositely rolling rollers simultaneously in the feeding step, and the plastic base layer may be located at a back side of the plastic layer.

A rolling device for implementing the rolling method for the long plastic layer comprises: a first feeding device for carrying the plastic layer, the oppositely rolling rollers including the embossing roller and a backing roller, and a control device for controlling the first feeding device and the oppositely rolling rollers;

the plastic layer entering the oppositely rolling rollers from the first feeding device; and the front side of the plastic layer being adjacent to the embossing roller. The rolling device further comprises a detecting device for detecting the longitudinal deviation between the embossed pattern on the embossing roller and the corresponding pattern on the plastic layer during rolling, and a tension controller disposed on the first feeding device; when the detecting device detects that the longitudinal deviation appears between the embossed pattern on the embossing roller and the corresponding pattern on the plastic layer, the control device controls the tension controller to adjust the tension of the plastic layer between the first feeding device and the oppositely rolling rollers according to the longitudinal deviation, so as to adjust the stretching length of the plastic layer before rolling, so that the longitudinal deviation in subsequent rolling is reduced until the embossed pattern is in register with the corresponding pattern on the plastic layer during rolling, and the embossing hot-rolled on the plastic layer is longitudinally in register with the corresponding pattern on the plastic layer.

In an embodiment of the present invention, the control device may control a heating temperature to be between 85°C and 250°C through controlling a hot medium flowing into the oppositely rolling rollers; and a spread length of the embossed pattern disposed around the outer circle of the embossing roller may be 1.01 to 1.5 times of the length a of one unit pattern on the plastic layer before stretching.

In an embodiment of the present invention, the detecting device may comprise a first sensor for detecting a position of a preset part in each unit pattern on the plastic layer and a second sensor for detecting a position of a corresponding part on the embossing roller corresponding to the preset part, the control device may use a distance difference or a time difference of signals detected by the two sensors as the longitudinal deviation of the embossing in the rolling step to control the tension of the first feeding device for feeding in the plastic layer, so as to adjust the stretching length of the plastic layer before rolling, so that the longitudinal deviation in subsequent rolling is reduced until the embossed pattern is longitudinally in register with the corresponding pattern on the plastic layer during rolling.

In an embodiment of the present invention, the first sensor may be a color mark sensor or an image sensor, and the second sensor may be a position sensor, a displacement sensor, or a rotation speed sensor.

In an embodiment of the present invention, a magnetic powder brake may be adopted as the tension controller and may be disposed on a feed axle of the first feeding device.

In an embodiment of the present invention, a lateral rectification device may be further comprised, wherein the lateral rectification device may comprise a third sensor for detecting a lateral deviation of the unit pattern on the plastic layer and a lateral transmission device for making the first feeding device move along a lateral direction, and the control device controls the lateral transmission device according to the lateral deviation of the unit pattern on the plastic layer detected by the third sensor, so as to make the first feeding device move along the lateral direction correspondingly, so that the pattern on the plastic layer is in register with the embossed pattern around the outer circle of the embossing roller on the lateral direction.

In an embodiment of the present invention, a second feeding device for feeding a plastic base layer in the oppositely rolling rollers may be further comprised, wherein the plastic base layer may be adjacent to the backing roller and may be hot-rolled to a back side of the plastic layer by the embossing roller and the backing roller.

The long plastic layer with the embossing in register with the pattern manufactured using the rolling method comprises a plastic layer, wherein the embossing hot-rolled on the plastic layer is in register with the pattern on the plastic layer.

In an embodiment of the present invention, a plastic base layer hot-rolled to a back side of the plastic layer may be further comprised.

Compared with the prior art, the present invention has the following beneficial effects. The above-mentioned conventional ways of the prior art are broken by employing the foregoing rolling method for the long plastic layer with the embossing in register with the pattern. In the rolling step, the feeding tension of the plastic layer is adjusted according to the longitudinal deviation between the embossed pattern on the embossing roller and the corresponding pattern on the plastic layer, so as to adjust the stretching length of the image plastic layer before rolling, so that the longitudinal deviation in subsequent rolling is reduced until the embossed pattern is in register with the corresponding pattern on the plastic layer during rolling, and the embossing hot-rolled on the plastic layer is longitudinally in register with the corresponding pattern on the plastic layer. This method can correct the deviation between the embossing and the pattern through the dynamic adjustment during the process of rolling. The processing of registering the embossing on the plastic layer with the pattern on the plastic layer is realized through the rolling method, greatly reducing the production costs and the energy losses, which is a major breakthrough for flooring processing.

After one embossing roller is manufactured, the spread length of the embossed pattern on the outer circle thereof is fixed, so that the spread length of the embossed pattern disposed around the outer circle of the embossing roller is 1.01 to 1.5 times of the length of one unit pattern on the plastic layer before stretching (for a specific embossing roller, the spread length of the embossed pattern disposed around the outer circle thereof is a certain value between 1.01a and 1.5a), so that the pattern on the stretched plastic layer is in register with the embossed pattern on the outer circle of the embossing roller, thereby realizing the embossing on the plastic layer in register with the pattern on the plastic layer.

The present invention has further beneficial effects. According to the rolling device for implementing the rolling method for the long plastic layer, the first feeding device and the oppositely rolling rollers are improved on the basis of the existing device, wherein the tension controller is additionally disposed on the first feeding device, and the detecting device for detecting the longitudinal deviation between the embossed pattern on the embossing roller and the corresponding pattern on the plastic layer during rolling is additionally added. When the plastic layer on the first feeding device is mechanically transferred or manually fed to the oppositely rolling rollers, the oppositely rolling rollers will have a tensile force of rolling the plastic layer into the oppositely rolling rollers; when the detecting device detects that the longitudinal deviation appears between the embossed pattern on the embossing roller and the corresponding pattern on the plastic layer, the control device controls the tension controller to adjust the tension of the plastic layer between the first feeding device and the oppositely rolling rollers according to the longitudinal deviation, so as to adjust the stretching length of the plastic layer before rolling and adjust the relative position between the oppositely rolling rollers and the plastic layer through the change of the stretching length of the plastic layer, thereby decreasing the longitudinal deviation during the subsequent rolling until the embossed pattern on the embossing roller is in register with the corresponding pattern on the plastic layer during rolling. Thus, the embossing hot-rolled on the plastic layer is longitudinally in register with the corresponding pattern on the plastic layer. This device can use the rolling method to implement a processing method of registering the embossing of the plastic layer with the pattern of the plastic layer, thereby improving the production efficiency by dozens of times, greatly reducing the production costs and the energy losses, which is a major breakthrough for the flooring processing.

For the long plastic layer with the embossing in register with the pattern manufactured by the rolling method, the embossing hot-rolled on the plastic layer is in register with the pattern on the plastic layer, thereby enhancing the sense of reality and the three-dimensional sense of the decorative material, which improves the simulation effect of the decorative material and has low production cost in unit area and high production efficiency. Moreover, because the long plastic layer is manufactured by the continuous rolling of the oppositely rolling rollers, the length thereof is greater than that of the decorative material processed using the lamination method in the prior art, and the long plastic layer is the decorative material having continuous length (including a plurality of continuous unit patterns). Different cutting positions can be set for such a long plastic layer decorative material having the continuous length, the cutting lengths are not limited, and the patterns of cut blocks are not repetitive. The flooring plank formed by bonding the blocks on the surface of a foaming board, a laminated board, a plastic base layer, or a wood-plastic board complies with the property of a natural material better.

### BRIEF DESCRIPTION OF THE DRAWINGS

FIG. 1 is a structure diagram of a processing device according to one embodiment of the present invention;
FIG. 2 is a structure diagram of a first feeding device according to one embodiment of the present invention;
Fig 3 is a sectional structural diagram of a long plastic layer with an embossing in register with a pattern according to one embodiment of the invention;
FIG. 4 is a structure diagram of unit patterns connected end to end according to one embodiment of the invention;
FIG. 5 is a structure diagram of an embossing roller according to one embodiment of the invention; and
FIG. 6 is a structure diagram of a second feeding device additionally disposed in FIG. 1.

### DETAILED DESCRIPTION OF THE INVENTION

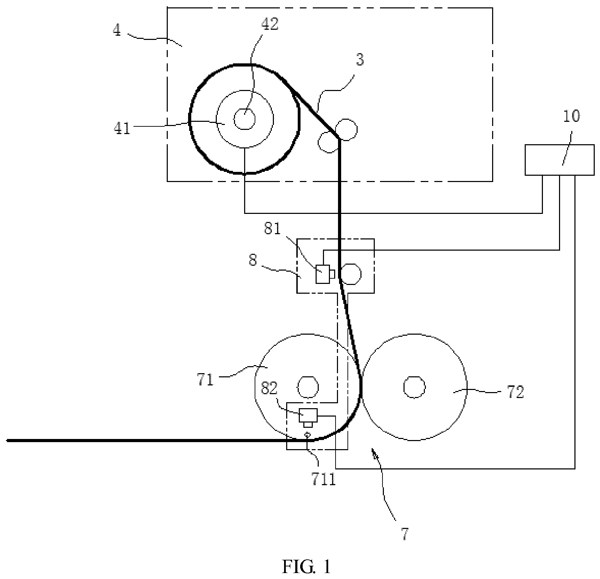

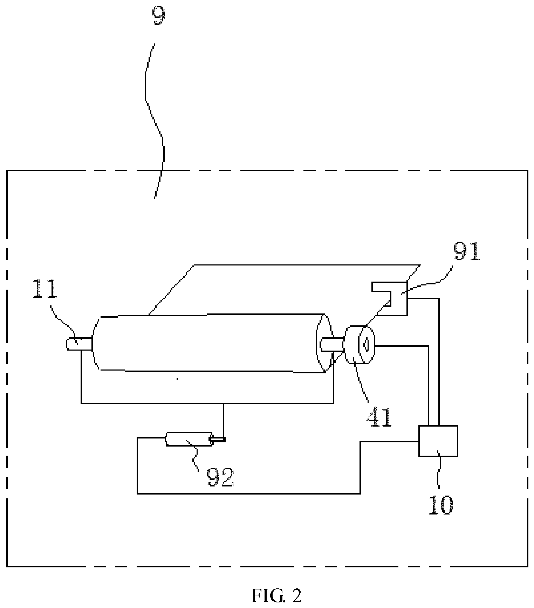

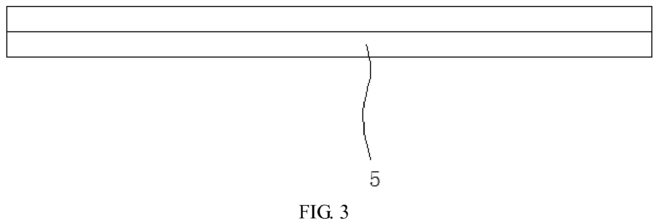

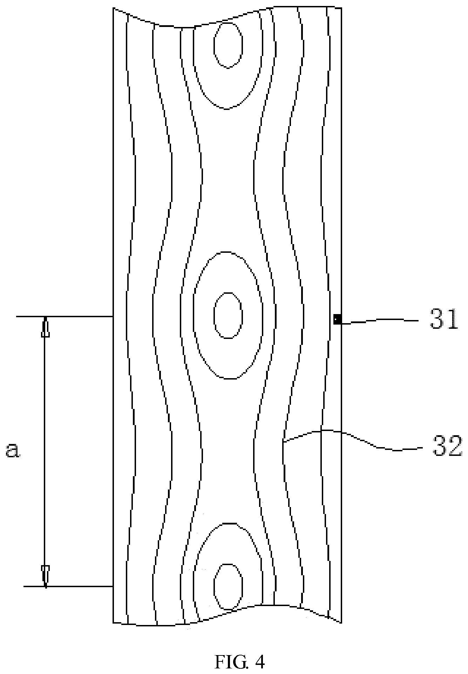

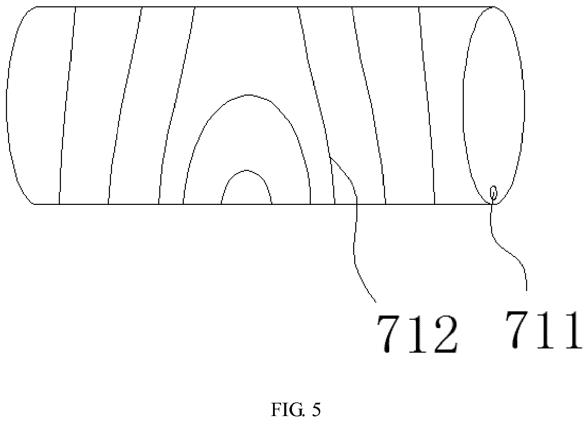

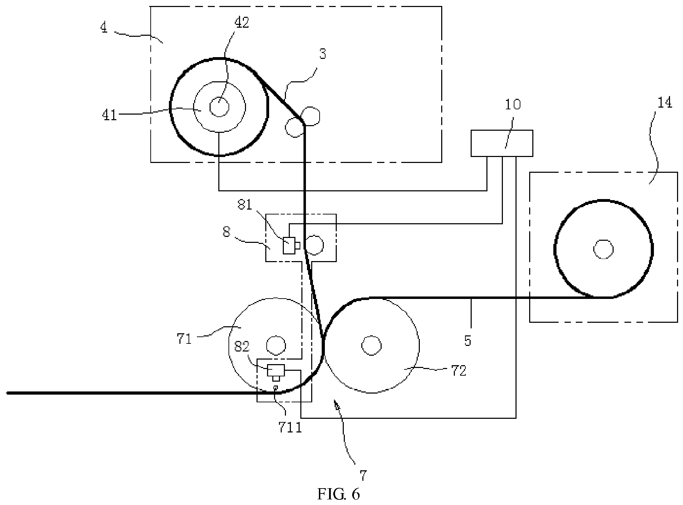

In order to represent the technical solution of the present invention more clearly, the present invention will be explained in details with reference to the accompanying drawings FIG. 1 to FIG. 6 hereinafter. It is to be understood that the detailed embodiments described in the description are only intended to interpret the present invention, rather than to define the protection scope of the present invention.

The present invention relates to a rolling method for a long plastic layer with an embossing in register with a pattern, comprising a feeding step of feeding a plastic layer 3 to be rolled into oppositely rolling rollers 7, the plastic layer 3 being printed with continuous unit patterns; and a rolling step of hot rolling an embossing on the plastic layer 3.

In the feeding step, a front side of the plastic layer 3 is adjacent to an embossing roller 71 of the oppositely rolling rollers 7, and an embossed pattern 712 disposed around an outer circle of the embossing roller 71 corresponds to a pattern 32 of one unit pattern on the plastic layer 3. Optionally, a spread length of the embossed pattern 712 disposed around the outer circle of the embossing roller 71 is 1.01 to 1.5 times of the length a of one unit pattern on the plastic layer 3 before stretching. In a lateral direction, the width of the plastic layer 3 changes little after the stretching, and a deviation of the embossing in a width direction is hard to be visually noticed and can be neglected. Optionally, the width of the embossed pattern 712 on the outer circle of the embossing roller 71 is 0.95-1 times of the width of the unit pattern on the plastic layer 3 before stretching.

In the rolling step, a longitudinal deviation of the embossing is adjusted. First, the longitudinal deviation between the embossed pattern 712 on the embossing roller 71 and the corresponding pattern 32 on the plastic layer 3 during rolling is detected, and a feeding tension of the plastic layer 3 is adjusted according to the longitudinal deviation, so as to adjust a stretching length of the plastic layer 3 before rolling, so that the longitudinal deviation in subsequent rolling is reduced until the embossed pattern 712 is longitudinally in register with the corresponding pattern 32 on the plastic layer 3 during rolling.

The longitudinal deviation of the embossing is measured by a distance difference or a time difference between a detected preset part 31 on each unit pattern of the plastic layer 3 and a detected corresponding part 711 on the embossing roller 71 corresponding to the preset part 31. Optionally, the adjusting step includes detecting a position of the preset part 31 on each unit pattern of the plastic layer 3 and detecting a position of the corresponding part 711 on the embossing roller 71 corresponding to the preset part 31 at the same time. When the preset part 31 is detected to be ahead of the corresponding part 711, increase the feeding tension of the plastic layer 3 to increase the stretching length of the plastic layer 3 before rolling, so as to reduce an ahead value of the preset part 31 in subsequent rolling until the deviation between the preset part 31 and the corresponding part 711 is zero, so that the embossing hot-rolled on the plastic layer 3 is longitudinally in register with the corresponding pattern 32 on the plastic layer 3. When the preset part 31 is detected to be lagging behind the corresponding part 711, decrease the feeding tension of the plastic layer 3 to decrease the stretching length of the plastic layer 3 before rolling, so as to increase a lagged value of the preset part 31 in the subsequent rolling until the deviation between the preset part 31 and the corresponding part 711 is zero, so that the embossing hot-rolled on the plastic layer 3 is longitudinally in register with the corresponding pattern 32 on the plastic layer 3. Certainly, the register mentioned herein refers to register in a deviation range hard to be visually noticed, for example, the deviation is 0-2mm and is preferably 0-0.5mm.

Optionally, a heating temperature in the rolling step ranges from 85°C to 250°C.

During the process of adjusting the longitudinal deviation of the embossing in the rolling step, a lateral deviation of the pattern is further adjusted. When the lateral deviation is detected to be existing between the pattern 32 on the plastic layer 3 and the embossed pattern 712 on the embossing roller 71, the plastic layer 3 or the embossing roller 71 is moved along a lateral direction, so that the pattern 32 on the plastic layer is in register with the embossed pattern 712 around the outer circle of the embossing roller 71 on the lateral direction.

The plastic layer 3 may either be a transparent plastic layer, or a non-transparent plastic layer. When the plastic layer is a transparent plastic layer, the continuous unit patterns may either be printed in the front side or the back side of the transparent plastic layer; and when the plastic layer is a non-transparent plastic layer, the continuous unit patterns are printed in the front side of the transparent plastic layer.

Further, the plastic layer 3 further comprises a plastic base layer 5. The plastic base layer 5 is delivered to the oppositely rolling rollers 7 simultaneously in the feeding step, and the plastic base layer 5 is located at the back side of the plastic layer 3.

A rolling device for implementing the rolling method for the long plastic layer comprises: a first feeding device 4 for carrying the plastic layer 3, the oppositely rolling rollers 7 including the embossing roller 71 and a backing roller 72, a control device 10 for controlling the first feeding device 4 and the oppositely rolling rollers 7, a detecting device 8 for detecting the longitudinal deviation between the embossed pattern 712 on the embossing roller 71 and the corresponding pattern 32 on the plastic layer 3 during rolling, and a tension controller 41 disposed on the first feeding device 4. The plastic layer 3 enters the oppositely rolling rollers 7 from the first feeding device 4, and the front side of the plastic layer 3 is adjacent to the embossing roller 71. As described in the foregoing rolling method for the long plastic layer, the embossed pattern 712 disposed around the outer circle of the embossing roller 71 corresponds to the pattern 32 of one unit pattern on the plastic layer 3. Optionally, the spread length of the embossed pattern 712 disposed around the outer circle of the embossing roller 71 is 1.01 to 1.5 times of the length a of one unit pattern on the plastic layer 3 before stretching. When the plastic layer 3 on the first feeding device 4 is mechanically transferred or manually fed to the oppositely rolling rollers 7, the oppositely rolling rollers 7 will have a tensile force of rolling the plastic layer 3 into the oppositely rolling rollers 7. When the detecting device 8 detects that the longitudinal deviation appears between the embossed pattern 712 on the embossing roller 71 and the corresponding pattern 32 on the plastic layer 3, the control device 10 controls the tension controller 41 to adjust the tension of the plastic layer 3 between the first feeding device 4 and the oppositely rolling rollers 7 according to the longitudinal deviation, so as to adjust the stretching length of the plastic layer 3 before rolling, thereby decreasing the longitudinal deviation during the subsequent rolling until the embossed pattern 712 is in register with the corresponding pattern 32 on the plastic layer 3 during rolling. Thus, the embossing hot-rolled on the plastic layer 3 is longitudinally in register with the corresponding pattern 32 on the plastic layer 3. Optionally, the detecting device comprises a first sensor 81 for detecting the position of the preset part 31 in each unit pattern on the plastic layer 3 and a second sensor 82 for detecting the position of the corresponding part 711 on the embossing roller 71 corresponding to the preset part 31. The control device 10 uses a distance difference or a time difference of signals detected by the two sensors 81 and 82 as the longitudinal deviation of the embossing in the rolling step to control the tension of the first feeding device 4 for feeding in the plastic layer 3, so as to adjust the stretching length of the plastic layer 3 before the rolling, so that the longitudinal deviation in the subsequent rolling is reduced until the embossed pattern 712 is longitudinally in register with the corresponding pattern 32 on the plastic layer 3 during rolling. Optionally, the first sensor 81 is a color mark sensor or an image sensor, and the second sensor 82 is a position sensor, a displacement sensor, or a rotation speed sensor. A magnetic powder brake is adopted as the tension controller 41, and is disposed on a feed axle 42 of the first feeding device 4.

The preset part 31 is preferably a partial pattern of a certain part on each unit pattern of the plastic layer 3 or is preferably a chromatic printing line (may either be a black chromatic line, or a color chromatic line in other colors) at the side of the plastic layer 3. A color mark sensor is adopted as the first sensor 81, the corresponding part 711 is a magnetic block disposed at an end face of the embossing roller 71, and a Hall sensor is adopted as the second sensor 82. The embossed pattern 712 on the embossing roller 71 corresponding to the magnetic block corresponds to the pattern on the plastic layer 3 corresponding to the preset part 31.

In the lateral direction, the width of the plastic layer 3 changes little after the stretching, and the deviation of the embossing in the width direction is hard to be visually noticed and can be neglected. Optionally, the width of the embossed pattern 712 on the outer circle of the embossing roller 71 is 0.95-1 times of the width of the unit pattern on the plastic layer 3 before stretching. To prevent the plastic layer 3 from deviation during feeding, a lateral rectification device 9 may be disposed. The lateral rectification device 9 includes a third sensor 91 for detecting a lateral deviation of the unit pattern on the plastic layer 3 and a lateral transmission device 92 for making the first feeding device 4 move along the lateral direction. The control device 10 controls the lateral transmission device 92 according to the lateral deviation of the unit pattern on the plastic layer 3 detected by the third sensor 91, so as to make the first feeding device 4 move along the lateral direction correspondingly, so that the pattern 32 on the plastic layer 3 is in register with the embossed pattern 712 around the outer circle of the embossing roller 71 on the lateral direction. During practical application, a second feeding device 14 for feeding a plastic base layer 5 in the oppositely rolling rollers 7 may also be additionally disposed. The plastic base layer 5 is adjacent to the backing roller 72 and is hot-rolled on the back side of the plastic layer 3 by the embossing roller 71 and the backing roller 72.

The long plastic layer with the embossing in register with the pattern manufactured using the foregoing rolling method comprises the plastic layer 3, and the embossing hot-rolled on the plastic layer 3 is in register with the pattern 32 on the plastic layer 3. Optionally, the long plastic layer 3 further comprises a plastic base layer 5 hot-rolled to the back side of the plastic layer 3.

The long plastic layer according to the foregoing technical solutions may either be bonded on the surface of a foaming board, a laminated board, or a wood-plastic board to form a composite board, or be hot-pressed together with the plastic base layer 5 and then is directly paved on a floor for use.

The plastic layer and the plastic base layer according to the foregoing solutions of the present invention refer to a PVC material layer, and certainly may also refer to other thermoplastic layer with stretchability or other materials having similar functions.

## Claims

1. A rolling method for a long plastic layer with an embossing in register with a pattern, comprising:
a feeding step of feeding the plastic layer (3) via a first feeding device (4) to be rolled into oppositely rolling rollers (7), the plastic layer (3) being printed with continuous unit patterns; and
a rolling step of hot rolling an embossing on the plastic layer (3);
in the feeding step, a front side of the plastic layer (3) being adjacent to an embossing roller (71) of the oppositely rolling rollers (7), and an embossed pattern (712) being disposed around an outer circle of the embossing roller (71) which corresponds to a pattern (32) of one unit pattern on the plastic layer (3),
wherein a longitudinal deviation of the embossing is adjusted in the rolling step by an adjusting step, the adjusting step comprises detecting the longitudinal deviation downstream of the first feeding device (4) and upstream of the oppositely rolling rollers (7) between the embossed pattern (712) on the embossing roller (71) and the corresponding pattern (32) on the plastic layer (3), wherein the adjusting step includes adjusting a feeding tension of the plastic layer (3) according to the longitudinal deviation via a tension controller (41) disposed on the first feeding device (4), so as to adjust a stretching length of the plastic layer (3) before rolling, so that the longitudinal deviation in subsequent rolling is reduced until the embossed pattern (712) is longitudinally in register with the corresponding pattern (32) on the plastic layer (3) during rolling.

2. The rolling method for the long plastic layer according to claim 1, wherein the adjusting step comprises detecting a position of a preset part (31) on each unit pattern of the plastic layer (3) and detecting a position of a corresponding part (711) on the embossing roller (71) corresponding to the preset part (31) at the same time, when the preset part (31) is detected to be ahead of the corresponding part (711), increase the feeding tension of the plastic layer (3) to increase the stretching length of the plastic layer (3) before rolling, so as to reduce an ahead value of the preset part (31) in subsequent rolling until a deviation between the preset part (31) and the corresponding part (711) is zero, so that the embossing hot-rolled on the plastic layer (3) is longitudinally in register with the corresponding pattern (32) on the plastic layer (3); and when the preset part (31) is detected to be lagging behind the corresponding part (711), decrease the feeding tension of the plastic layer (3) to decrease the stretching length of the plastic layer (3) before rolling, so as to increase a lagged value of the preset part (31) in the subsequent rolling until the deviation between the preset part (31) and the corresponding part (711) is zero, so that the embossing hot-rolled on the plastic layer (3) is longitudinally in register with the corresponding pattern (32) on the plastic layer (3).

3. The rolling method for the long plastic layer according to claim 1, wherein a spread length of the embossed pattern (712) disposed around the outer circle of the embossing roller (71) is 1.01 to 1.5 times of a length (a) of one unit pattern on the plastic layer (3) before stretching; and a heating temperature in the rolling step ranges from 85°C to 250°C.

4. The rolling method for the long plastic layer according to claim 1, wherein in the rolling step, the longitudinal deviation of the embossing is measured by a distance difference or a time difference between a detected preset part (31) on each unit pattern of the plastic layer (3) and a detected corresponding part (711) on the embossing roller (71) corresponding to the preset part (31).

5. The rolling method for the long plastic layer according to any one of claims 1 to 4, wherein during the process of adjusting the longitudinal deviation of the embossing in the rolling step, a lateral deviation of the pattern is further adjusted, and when a lateral deviation is detected to be existing between the pattern (32) on the plastic layer (3) and the embossed pattern (712) on the embossing roller (71), the plastic layer (3) or the embossing roller (71) is moved along a lateral direction, so that the pattern (32) on the plastic layer (3) is in register with the embossed pattern (712) around the outer circle of the embossing roller (71) on the lateral direction.

6. The rolling method for the long plastic layer according to claim 5, further comprising a plastic base layer (5), wherein the plastic base layer (5) is delivered to the oppositely rolling rollers (7) simultaneously in the feeding step, and the plastic base layer (5) is located at a back side of the plastic layer (3).

7. A rolling device for implementing the rolling method for the long plastic layer according to claims 1, 2, 3, or 4, comprising:
a first feeding device (4) for carrying the plastic layer (3),
the oppositely rolling rollers (7) including the embossing roller (71) and a backing roller (72) for the plastic layer (3) to enter therebetween,
a detecting device (8) for detecting a longitudinal deviation between an embossed pattern (712) on the embossing roller (71) and a corresponding pattern (32) on the plastic layer (3) during rolling; the plastic layer (3) entering the oppositely rolling rollers (7) from the first feeding device (4) with the front side of the plastic layer (3) being adjacent to the hot embossing roller (71); and
a control device (10) for controlling the first feeding device (4) and the oppositely rolling rollers (7);
wherein the detecting device (8) is positioned between the first feeding device (4) and the oppositely rolling rollers (7) wherein the rolling device further comprises a tension controller (41) disposed on the first feeding device (4); such that when the detecting device (8) detects longitudinal deviation between the embossed pattern (712) on the embossing roller (71) and the corresponding pattern (32) on the plastic layer (3), the control device (10) is adapted to control the tension controller (41) to adjust the tension and stretching length of the plastic layer (3) between the first feeding device (4) and the oppositely rolling rollers (7) according to the longitudinal deviation before rolling, so that the longitudinal deviation in subsequent rolling is reduced until the embossed pattern (712) is in register with the corresponding pattern (32) on the plastic layer (3) during rolling, and the embossing hot-rolled on the plastic layer (3) is longitudinally in register with the corresponding pattern (32) on the plastic layer (3).

8. The rolling device according to claim 7, wherein the control device (10) controls a heating temperature to be between 85°C and 250°C through controlling a hot medium flowing into the oppositely rolling rollers (7); and a spread length of the embossed pattern (712) disposed around the outer circle of the embossing roller (71) is 1.01 to 1.5 times of a length (a) of one unit pattern on the plastic layer (3) before stretching.

9. The rolling device according to claim 7, wherein the detecting device (8) comprises a first sensor (81) for detecting a position of a preset part (31) in each unit pattern on the plastic layer (3) and a second sensor (82) for detecting a position of a corresponding part (711) on the embossing roller (71) corresponding to the preset part (31), the control device (10) uses a distance difference or a time difference of signals detected by the two sensors (81, 82) as the longitudinal deviation of the embossing in the rolling step to control the tension of the plastic layer between the first feeding device (4) and the oppositely rolling rollers (7).

10. The rolling device according to claim 9, wherein the first sensor (81) is a color mark sensor or an image sensor, and the second sensor (82) is a position sensor, a displacement sensor, or a rotation speed sensor.

11. The rolling device according to any one of claims 7 to 10, wherein a magnetic powder brake is adopted as the tension controller (41) and is disposed on a feed axle (42) of the first feeding device (4).

12. The rolling device according to any one of claims 7 to 10, further comprising a lateral rectification device (9), wherein the lateral rectification device (9) comprises a third sensor (91) for detecting a lateral deviation of the unit pattern on the plastic layer (3) and a lateral transmission device (92) for making the first feeding device (4) move along a lateral direction, and the control device (10) controls the lateral transmission device (92) according to the lateral deviation of the unit pattern on the plastic layer (3) detected by the third sensor (91), so as to make the first feeding device (4) move along the lateral direction correspondingly, so that the pattern (32) on the plastic layer (3) is in register with the embossed pattern (712) around the outer circle of the embossing roller (71) on the lateral direction.

13. The rolling device according to any one of claims 7 to 10, further comprising a second feeding device (14) for feeding a plastic base layer (5) in the oppositely rolling rollers (7), wherein the plastic base layer (5) is adjacent to the backing roller (72) and is hot-rolled to a back side of the plastic layer (3) by the embossing roller (71) and the backing roller (72).

## Patentansprüche

1. Walzverfahren für eine lange Kunststoffschicht mit einer zu einem Muster registerhaltigen Prägung, das Folgendes umfasst:
einen Zuführschritt des Zuführens der Kunststoffschicht (3) über eine erste Zuführvorrichtung (4), die in gegenläufig walzenden Walzen (7) zugeführt werden soll; wobei die Kunststoffschicht (3) mit durchgehenden Einheitsmustern bedruckt wird; und
einen Walzschritt des Heißwalzens einer Prägung auf die Kunststoffschicht (3);
wobei während des Zuführschritts eine vordere Seite der Kunststoffschicht (3) an eine Prägewalze (71) der einander gegenläufig walzenden Walzen (7) angrenzt, und ein geprägtes Muster (712) um einen äußeren Kreis der Prägewalze (71) herum angebracht ist, das einem Muster (32) eines Einheitsmusters auf der Kunststoffschicht (3) entspricht;
wobei eine Längsabweichung der Prägung während des Walzschritts mittels eines Anpassungsschritts angepasst wird; wobei der Anpassungsschritt das Detektieren der Längsabweichung stromabwärts der ersten Zuführvorrichtung (4) und stromaufwärts der einander gegenläufig walzenden Walzen (7) zwischen dem geprägten Muster (712) auf der Prägewalze (71) und dem entsprechenden Muster (32) auf der Kunststoffschicht (3) umfasst;
wobei der Anpassungsschritt das Anpassen einer Zuführspannung der Kunststoffschicht (3) entsprechend der Längsabweichung mittels einer Spannungsregeleinrichtung (41) umfasst, die an die erste Zuführvorrichtung (4) angrenzend angebracht ist, so dass eine Dehnungslänge der Kunststoffschicht (3) vor dem Walzen so angepasst wird, dass die Längsabweichung im weiteren Verlauf des Walzenvorgangs so weit verringert wird, bis das geprägte Muster (712) zu dem entsprechenden Muster (32) auf der Kunststoffschicht (3) während des Walzens in Längsrichtung registerhaltig ist.

2. Walzverfahren für die lange Kunststoffschicht nach Anspruch 1, wobei der Anpassungsschritt das Detektieren einer Position eines voreingestellten Teils (31) an jedem Einheitsmuster der Kunststoffschicht (3) und das Detektieren einer Position eines entsprechenden Teils (711) auf der Prägewalze (71), das dem voreingestellten Teil (31) entspricht; wobei wenn detektiert wird, dass das voreingestellte Teil (31) sich vor dem entsprechenden Teil (711) befindet, die Zuführspannung der Kunststoffschicht (3) erhöht wird, um die Dehnungslänge der Kunststoffschicht (3) vor dem Walzen derart zu vergrößern, dass ein Vorlauf des voreingestellten Teils (31) im weiteren Verlauf des Walzenvorgangs verringert wird, bis eine Abweichung zwischen dem voreingestellten Teil (31) und dem entsprechenden Teil (711) gleich Null ist, so dass die auf die Kunststoffschicht (3) heißgewalzte Prägung zu dem entsprechenden Muster (32) auf der Kunststoffschicht (3) in Längsrichtung registerhaltig ist; und wenn detektiert wird, dass das voreingestellte Teil (31) hinter dem entsprechenden Teil (711) im Verzug ist, die Zuführspannung der Kunststoffschicht (3) verringert wird, um die Dehnungslänge der Kunststoffschicht (3) vor dem Walzen derart zu reduzieren, dass ein verzögerter Wert des voreingestellten Teils (31) im weiteren Verlauf des Walzenvorgangs erhöht wird, bis die Abweichung zwischen dem voreingestellten Teil (31) und dem entsprechenden Teil (711) gleich Null ist, so dass die auf die Kunststoffschicht (3) heißgewalzte Prägung zu dem entsprechenden Muster (32) auf der Kunststoffschicht (3) in Längsrichtung registerhaltig ist.

3. Walzverfahren für die lange Kunststoffschicht nach Anspruch 1, wobei eine Ausbreitungslänge des geprägten Musters (712), das um den Außenkreis der Prägewalze herum angebracht ist (71), 1,01- bis 1,5-fache einer Länge (a) eines Einheitsmusters auf der Kunststoffschicht (3) vor der Ausbreitung darstellt, und eine Heiztemperatur während des Heizschritts zwischen 85 °C und 250 °C liegt.

4. Walzverfahren für die lange Kunststoffschicht nach Anspruch 1, wobei während des Walzschritts die Längsabweichung der Prägung anhand einer Abstands- oder Zeitdifferenz zwischen einem detektierten voreingestellten Teil (31) an jedem Einheitsmuster der Kunststoffschicht (3) und einem entsprechenden, detektierten Teil (711) auf der Prägewalze (71), das dem voreingestellten Teil (31) entspricht, gemessen wird.

5. Walzverfahren für die lange Kunststoffschicht nach einem der Ansprüche 1 bis 4, wobei im Verlauf des Prozesses zur Anpassung der Längsabweichung der Prägung während des Walzschritts ferner eine seitliche Abweichung des Musters einer Anpassung unterzogen wird, und wenn das Vorliegen einer seitlichen Abweichung zwischen dem Muster (32) auf der Kunststoffschicht (3) und dem geprägten Muster (712) auf der Prägewalze (71) detektiert wird, die Kunststoffschicht (3) oder die Prägewalze (71) in einer seitlichen Richtung derart verschoben wird, dass das Muster (32) auf der Kunststoffschicht (3) zu dem geprägten Muster (712) um den äußeren Kreis der Prägewalze (71) herum in der seitlichen Richtung registerhaltig ist.

6. Walzverfahren für die lange Kunststoffschicht nach Anspruch 5, das ferner eine Kunststoff-Basisschicht (5) umfasst; wobei die Kunststoff-Basisschicht (5) während des Zuführschritts gleichzeitig zu den einander gegenläufig walzenden Walzen (7) gebracht wird und die Kunststoff-Basisschicht (5) auf einer Rückseite der Kunststoffschicht (3) angeordnet wird.

7. Walzvorrichtung zur Durchführung des Walzverfahrens für die lange Kunststoffschicht nach Anspruch 1, 2, 3 oder 4, die Folgendes umfasst:
eine erste Zuführvorrichtung (4), die dazu bestimmt ist, die Kunststoffschicht (3) zu transportieren;
die gegenläufig walzenden Walzen (7), die die Prägewalze (71) und eine Gegenwalze (72) enthalten, zwischen denen die Kunststoffschicht (3) hindurchgeführt werden soll;
eine Detektiervorrichtung (8) zum Detektieren einer Längsabweichung zwischen einem geprägten Muster (712) auf der Prägewalze (71) und einem entsprechenden Muster (32) auf der Kunststoffschicht (3) während des Walzens; wobei die Kunststoffschicht (3) von der ersten Zuführvorrichtung (4) aus zwischen die einander gegenläufig walzenden Walzen (7) einläuft; wobei die vordere Seite der Kunststoffschicht (3) an die Heißprägewalze (71) angrenzend angebracht ist; und
eine Steuereinrichtung (10) zur Steuerung der ersten Zuführvorrichtung (4) und der gegenläufig walzenden Walzen (7);
wobei die Detektiervorrichtung (8) zwischen der ersten Zuführvorrichtung (4) und den einander gegenläufig walzenden Walzen (7) angebracht ist;
wobei die Walzvorrichtung ferner eine Spannungsregeleinrichtung (41) umfasst, die an der ersten Zuführvorrichtung (4) derart angebracht ist, dass, wenn die Detektiervorrichtung (8) eine Längsabweichung zwischen dem geprägten Muster (712) auf der Prägewalze (71) und dem entsprechenden Muster (32) auf der Kunststoffschicht (3) erfasst, die Steuereinrichtung (10) so ausgelegt ist, dass sie der Spannungsregeleinrichtung (41) den Befehl erteilt, eine Anpassung der Spannung und der Dehnungslänge der Kunststoffschicht (3) zwischen der ersten Zuführvorrichtung (4) und den einander gegenläufig walzenden Walzen (7) entsprechend der Längsabweichung vor dem Walzen derart anzubringen, dass die Längsabweichung im weiteren Verlauf des Walzenvorgangs so lange verringert wird, bis das geprägte Muster (712) zu dem entsprechenden Muster (32) auf der Kunststoffschicht (3) während des Walzens registerhaltig ist, und die auf die Kunststoffschicht (3) heißgewalzte Prägung zu dem entsprechenden Muster (32) auf der Kunststoffschicht (3) in Längsrichtung registerhaltig ist.

8. Walzvorrichtung nach Anspruch 7, wobei die Steuereinrichtung (10) eine Heiztemperatur so regelt, dass diese durch die Regelung eines Heißmediums, das im Inneren der einander gegenläufig walzenden Walzen (7) strömt, zwischen 85 °C und 250 °C liegt; und wobei eine Ausbreitungslänge des geprägten Musters (712), das um den äußeren Kreis der Prägewalze (71) herum angebracht ist, das 1,01- bis 1,5-fache einer Länge (a) eines Einheitsmusters auf der Kunststoffschicht (3) vor der Ausdehnung darstellt.

9. Walzvorrichtung nach Anspruch 7, wobei die Detektiervorrichtung (8) einen ersten Sensor (81) umfasst, der dazu bestimmt ist, eine Position eines voreingestellten Teils (31) in jedem Einheitsmuster auf der Kunststoffschicht (3) zu erfassen, sowie einen zweiten Sensor (82), der dazu bestimmt ist, eine Position eines entsprechenden Teils (711) auf der Prägewalze (71) entsprechend dem voreingestellten Teil (31) zu erfassen; wobei die Steuervorrichtung (10) eine Abstandsdifferenz oder eine Zeitdifferenz hinsichtlich der von den beiden Sensoren (81, 82) erfassten Signale nutzt, als Längsabweichung der Prägung während des Walzschritts, um die Spannung der Kunststoffschicht zwischen der ersten Zuführvorrichtung (4) und den einander gegenläufig walzenden Walzen (7) einzustellen.

10. Walzvorrichtung nach Anspruch 9, wobei der erste Sensor (81) ein Farbsensor oder ein Bildsensor ist und der zweite Sensor (82) ein Positionssensor, ein Wegsensor oder ein Drehzahlsensor ist.

11. Walzvorrichtung nach einem der Ansprüche 7 bis 10, wobei eine Magnetpulverbremse als Spannungsregeleinrichtung (41) ausgebildet ist und auf einer Zuführungsachse (42) der ersten Zuführvorrichtung (4) angeordnet ist.

12. Walzvorrichtung nach einem der Ansprüche 7 bis 10, die ferner eine seitliche Korrektureinrichtung (9) umfasst; wobei die seitliche Korrektureinrichtung (9) einen dritten Sensor (91) zum Detektieren einer seitlichen Abweichung des Einheitsmusters auf der Kunststoffschicht (3) und eine seitliche Übertragungsvorrichtung (92) umfasst, die dazu bestimmt ist, die erste Zuführvorrichtung (4) in seitlicher Richtung zu verschieben; und wobei die Steuereinrichtung (10) die seitliche Übertragungsvorrichtung (92) in Abhängigkeit von der seitlichen Abweichung des Einheitsmusters auf der Kunststoffschicht (3), die durch den dritten Sensor (91) detektiert wurde, derart steuert, dass sie bewirkt, dass die erste Zuführvorrichtung (4) entsprechend in seitlicher Richtung verschoben wird, wodurch das Muster (32) auf der Kunststoffschicht (3) um den Außenkreis der Prägewalze (71) herum in seitlicher Richtung registerhaltig mit dem geprägten Muster (712) ist.

13. Walzvorrichtung nach einem der Ansprüche 7 bis 10, die ferner eine zweite Zuführvorrichtung (14) umfasst, die dazu bestimmt ist, eine Kunststoff-Basisschicht (5) zwischen den einander gegenläufig walzenden Walzen (7) zuzuführen; wobei die Kunststoff-Basisschicht (5) an die Gegenwalze (72) angrenzend angebracht ist und unter Mitwirkung der Prägewalze (71) und der Gegenwalze (72) auf eine Seite der Kunststoffschicht (3) heißgewalzt wird.

## Revendications

1. Procédé de laminage pour une longue couche en matière plastique comprenant un gaufrage mis en repérage avec un motif, qui comprend :
une étape d'alimentation au cours de laquelle, par l'intermédiaire d'un premier dispositif d'alimentation (4), on alimente la couche en matière plastique (3) qui doit être soumise à un laminage entre des rouleaux de laminage (7) tournant en sens inverse ; dans lequel la couche en matière plastique (3) est imprimée avec des motifs unitaires continus ; et
une étape de laminage au cours de laquelle, par l'intermédiaire d'un laminage à chaud, on applique un gaufrage sur la couche en matière plastique (3) ;
dans lequel, au cours de l'étape d'alimentation, un côté avant de la couche en matière plastique (3) est situé en position adjacente à un rouleau de gaufrage (71) parmi les rouleaux de laminage (7) tournant en sens inverse, et un motif (712) sous la forme d'un gaufrage est disposé autour d'un cercle externe du rouleau de gaufrage (71), qui correspond à un motif (32) d'un motif unitaire sur la couche en matière plastique (3) ;
dans lequel une déviation longitudinale du gaufrage est soumise à un ajustage au cours de l'étape de laminage par l'intermédiaire d'une étape d'ajustage ; dans lequel l'étape d'ajustage comprend le fait de détecter la déviation longitudinale en aval du premier dispositif d'alimentation (4) et en amont des rouleaux de laminage (7) tournant en sens inverse entre le motif (712) sous la forme d'un gaufrage sur le rouleau de gaufrage (71) et le motif correspondant (32) sur la couche en matière plastique (3) ; dans lequel
l'étape d'ajustage englobe le fait d'ajuster une tension d'alimentation de la couche en matière plastique (3) en conformité avec la déviation longitudinale par l'intermédiaire d'un dispositif de réglage de la tension (41) qui est disposé sur le premier dispositif d'alimentation (4) d'une manière telle que l'on ajuste une longueur d'étirage de la couche en matière plastique (3) avant le laminage, tant et si bien que l'on réduit la déviation longitudinale dans la suite du laminage jusqu'à ce que le motif (712) sous la forme d'un gaufrage soit mis en repérage, dans la direction longitudinale, avec le motif correspondant (32) sur la couche en matière plastique (3) au cours du laminage.

2. Procédé de laminage pour la longue couche en matière plastique selon la revendication 1, dans lequel l'étape d'ajustage comprend le fait de détecter une position d'un composant préréglé (31) sur chaque motif unitaire de la couche en matière plastique (3) et le fait de détecter en même temps une position d'un composant correspondant (711) sur le rouleau de gaufrage (71) qui correspond à celle du composant préréglé (31) ; lorsque l'on détecte que le composant préréglé (31) se trouve à l'avant du composant correspondant (711), on augmente la tension d'alimentation de la couche en matière plastique (3) dans le but d'augmenter la longueur d'étirage de la couche en matière plastique (3) avant le laminage, de manière telle que l'on réduit une valeur avancée du composant préréglé (31) dans la suite du laminage jusqu'à ce qu'une déviation entre le composant préréglé (31) et le composant correspondant (711) soit égale à zéro, d'une manière telle que le motif sous la forme d'un gaufrage appliqué par laminage à chaud sur la couche en matière plastique (3) est mis en repérage, dans la direction longitudinale, avec le motif correspondant (32) sur la couche en matière plastique (3) ; et lorsque l'on détecte que le composant préréglé (31) prend du retard par rapport au composant correspondant (711), on diminue la tension d'alimentation de la couche en matière plastique (3) dans le but de réduire la longueur d'étirage de la couche en matière plastique (3) avant le laminage, de manière telle que l'on augmente une valeur retardée du composant préréglé (31) dans la suite du laminage jusqu'à ce que la déviation entre le composant préréglé (31) et le composant correspondant (711) soit égale à zéro, d'une manière telle que le gaufrage laminé à chaud sur la couche en matière plastique (3) est mis en repérage longitudinal avec le motif correspondant (32) sur la couche en matière plastique (3).

3. Procédé de laminage pour la longue couche en matière plastique selon la revendication 1, dans lequel une longueur d'étalement du motif (712) sous la forme d'un gaufrage disposé autour du cercle externe du rouleau de gaufrage (71) représente de 1,01 à 1,5 fois une longueur (a) d'un motif unitaire sur la couche en matière plastique (3) avant l'étirage, et une température de chauffage se situe entre 85 °C et 250 °C.

4. Procédé de laminage pour la longue couche en matière plastique selon la revendication 1, dans lequel, au cours de l'étape de laminage, on mesure la déviation longitudinale du gaufrage par l'intermédiaire d'une différence de distance ou d'une différence de temps entre un composant préréglé détecté (31) sur chaque motif unitaire de la couche en matière plastique (3) et un composant correspondant détecté (711) sur le rouleau de gaufrage (71) de manière correspondante au composant préréglé (31).

5. Procédé de laminage pour la longue couche en matière plastique selon l'une quelconque des revendications 1 à 4, dans lequel, au cours du processus d'ajustage de la déviation longitudinale du motif sous la forme d'un gaufrage au cours de l'étape de laminage, on soumet en outre une déviation latérale du motif à un ajustage, et lorsqu'on détecte l'existence d'une déviation latérale entre le motif (32) sur la couche en matière plastique (3) et le motif (712) sous la forme d'un gaufrage sur le rouleau de gaufrage (71), on soumet la couche en matière plastique (3) ou le rouleau de gaufrage (71) à un déplacement dans une direction latérale, d'une manière telle que le motif (32) sur la couche en matière plastique (3) est mis en repérage avec le motif (712) sous la forme d'un gaufrage autour du cercle externe du rouleau de gaufrage (71) dans la direction latérale.

6. Procédé de laminage pour la longue couche en matière plastique selon la revendication 5, qui comprend en outre une couche de base en matière plastique (5) ; dans lequel la couche de base en matière plastique (5) est distribuée aux rouleaux de laminage (7) tournant en sens inverse de manière simultanée au cours de l'étape d'alimentation, et la couche de base en matière plastique (5) est disposée sur un côté dorsal de la couche en matière plastique (3).

7. Dispositif de laminage pour la mise en œuvre du procédé de laminage pour la longue couche en matière plastique selon la revendication 1, 2, 3 ou 4, qui comprend :
un premier dispositif d'alimentation (4) qui est destiné à transporter la couche en matière plastique (3) ;
des rouleaux de laminage (7) tournant en sens inverse qui englobent le rouleau de gaufrage (71) et un rouleau d'appui (72) entre lesquels la couche en matière plastique (3) est destinée à pénétrer ;
un dispositif de détection (8) destiné à détecter une déviation longitudinale entre un motif (712) sous la forme d'un gaufrage sur le rouleau de gaufrage (71) et un motif correspondant (32) sur la couche en matière plastique (3) au cours du laminage ; dans lequel la couche en matière plastique (3) pénètre entre les rouleaux de laminage (7) tournant en sens inverse à partir du premier dispositif d'alimentation (4) ; dans lequel le côté avant de la couche en matière plastique (3) est disposé en position adjacente au rouleau de gaufrage à chaud (71) ; et
un dispositif de commande (10) destiné à commander le premier dispositif d'alimentation (4) et les rouleaux de laminage (7) tournant en sens inverse ;
dans lequel le dispositif de détection (8) est disposé entre le premier dispositif d'alimentation (4) et les rouleaux de laminage (7) tournant en sens inverse ;
dans lequel le dispositif de laminage comprend en outre un dispositif de réglage de la tension (41) disposé sur le premier dispositif d'alimentation (4), d'une manière telle que, lorsque le dispositif de détection (8) détecte une déviation longitudinale entre le motif (712) sous la forme d'un gaufrage sur le rouleau de gaufrage (71) et le motif correspondant (32) sur la couche en matière plastique (3), le dispositif de commande (10) est conçu pour donner ordre au dispositif de réglage de la tension (41) de procéder à un ajustage de la tension et de la longueur d'étirage de la couche en matière plastique (3) entre le premier dispositif d'alimentation (4) et les rouleaux de laminage (7) tournant en sens inverse en conformité avec la déviation longitudinale avant le laminage, d'une manière telle que l'on réduit la déviation longitudinale dans la suite du laminage jusqu'à ce que le motif (712) sous la forme d'un gaufrage soit mis en repérage avec le motif correspondant (32) sur la couche en matière plastique (3) au cours du laminage, et jusqu'à ce que le motif sous la forme d'un gaufrage appliqué par laminage à chaud sur la couche en matière plastique (3) soit mis en repérage dans la direction longitudinale avec le motif correspondant (32) sur la couche en matière plastique (3).

8. Dispositif de laminage selon la revendication 7, dans lequel le dispositif de commande (10) règle une température de chauffage pour que celle-ci se situe entre 85 °C et 250 °C par l'intermédiaire du réglage d'un milieu chaud qui s'écoule à l'intérieur des rouleaux de laminage (7) tournant en sens inverse ; et dans lequel une longueur d'étalement du motif (712) sous la forme d'un gaufrage disposé autour du cercle externe du rouleau de gaufrage (71) représente de 1,01 à 1,5 fois une longueur (a) d'un motif unitaire sur la couche en matière plastique (3) avant l'étirage.

9. Dispositif de laminage selon la revendication 7, dans lequel le dispositif de détection (8) comprend un premier capteur (81) qui est destiné à détecter une position d'un composant préréglé (31) dans chaque motif unitaire sur la couche en matière plastique (3) et un deuxième capteur (82) qui est destiné à détecter une position d'un composant correspondant (711) sur le rouleau de gaufrage (71) de manière correspondante au composant préréglé (31) ; dans lequel le dispositif de commande (10) utilise une différence de distance ou une différence de temps en ce qui concerne les signaux détectés par les deux capteurs (81, 82), au titre de la déviation longitudinale du gaufrage au cours de l'étape de laminage dans le but de régler la tension de la couche en matière plastique entre le premier dispositif d'alimentation (4) et les rouleaux de laminage (7) tournant en sens inverse.

10. Dispositif de laminage selon la revendication 9, dans lequel le premier capteur (81) représente un capteur d'un repère de couleur ou un capteur d'image, et le deuxième capteur (82) représente un capteur de position, un capteur de déplacement ou un capteur de la vitesse de rotation.

11. Dispositif de laminage selon l'une quelconque des revendications 7 à 10, dans lequel un frein du type à poudre magnétique fait office de dispositif de réglage de la tension (41) et est disposé sur un axe d'alimentation (42) du premier dispositif d'alimentation (4).

12. Dispositif de laminage selon l'une quelconque des revendications 7 à 10, qui comprend en outre un dispositif de rectification latérale (9) ; dans lequel le dispositif de rectification latérale (9) comprend un troisième capteur (91) destiné à détecter une déviation latérale du motif unitaire sur la couche en matière plastique (3) et un dispositif de transmission latérale (92) destiné à faire en sorte de déplacer le premier dispositif d'alimentation (4) dans une direction latérale ; et dans lequel le dispositif de commande (10) commande le dispositif de transmission latérale (92) en fonction de la déviation latérale du motif unitaire sur la couche en matière plastique (3) qui a été détectée par le troisième capteur (91), d'une manière telle que le premier dispositif d'alimentation (4) est soumis à un déplacement dans la direction latérale d'une manière correspondante, si bien que le motif (32) sur la couche en matière plastique (3) est mis en repérage avec le motif (712) sous la forme d'un gaufrage autour du cercle externe du rouleau de gaufrage (71) dans la direction latérale.

13. Dispositif de laminage selon l'une quelconque des revendications 7 à 10, qui comprend en outre un deuxième dispositif d'alimentation (14) qui est destiné à l'alimentation d'une couche de base en matière plastique (5) entre les rouleaux de laminage (7) tournant en sens inverse ; dans lequel la couche de base en matière plastique (5) est disposée en position adjacente au rouleau d'appui (72) et est appliquée par l'intermédiaire d'un laminage à chaud sur un côté dorsal de la couche en matière plastique (3) à l'intervention du rouleau de gaufrage (71) et du rouleau d'appui (72).
